Europäisches Patentamt

**European Patent Office**

Office européen des brevets

(19)

(11) Numéro de publication : **0 000 083**
**B1**

# FASCICULE DE BREVET EUROPÉEN

(12)

(45) Date de publication du fascicule du brevet :
02.12.81

(21) Numéro de dépôt : 78200027.7

(22) Date de dépôt : 01.06.78

(51) Int. Cl.³ : **H 01 M 2/16//** C08F14/06,
C08F2/18

(54) **Utilisation de poudres de polymères du chlorure de vinyle pour la fabrication de séparateurs de batteries.**

(30) Priorité : 07.06.77 FR 7717798

(43) Date de publication de la demande :
20.12.78 (Bulletin 78/01)

(45) Mention de la délivrance du brevet :
02.12.81 Bulletin 81/48

(84) Etats contractants désignés :
**BE CH DE FR GB LU NL SE**

(56) Documents cités :
**DE - A - 2 153 886**
**FR - A - 2 095 866**
**CHEMICAL ABSTRACTS,**
**Vol. 85 (1976) 195271 Z**

(73) Titulaire : **SOLVAY & Cie (Société Anonyme)**
**Rue du Prince Albert, 33**
**B-1050 Bruxelles (BE)**

(72) Inventeur : **Petit, André**
**Rue des Pêchers, 20**
**B-1120 Bruxelles (BE)**

(74) Mandataire : **Eischen, Roland**
**Solvay & Cie Département de la Propriété Industrielle**
**Rue de Ransbeek 310**
**B-1120 Bruxelles (BE)**

Imprimerie Jouve, 17, rue du Louvre, 75001 Paris, France

**0 000 083**

Utilisation de poudres de polymères du chlorure de vinyle pour la fabrication de séparateurs
de batteries

La présente invention concerne l'utilisation de poudres de polymères du chlorure de vinyle pour la fabrication de plaques de séparation pour piles et accumulateurs (séparateurs de batteries).

Parmi les qualités exigées des résines en poudre destinées à la fabrication de séparateurs de batteries, on peut mentionner une bonne mouillabilité et une faible dimension moyenne des particules susceptible d'assurer l'obtention de séparateurs à pores de faible diamètre. C'est pour cette raison qu'on préconise habituellement d'utiliser, pour cette application particulière, des poudres de polychlorure de vinyle obtenues par polymérisation en émulsion aqueuse. Il s'avère en effet que les polymères en poudre obtenus en émulsion aqueuse présentent dans l'ensemble de bonnes propriétés de mise en œuvre : ils sont frittables et se laissent aisément appliquer à la râcle ou au rouleau. La mouillabilité des séparateurs résultants est par ailleurs généralement satisfaisante. Ceux-ci sont néanmoins déficients sur le plan de la résistance électrique et mécanique et ils ont tendance à engendrer la formation de mousse suite à leur teneur élevée en émulsionnants.

Dans le brevet français 71.20132 (demande FR-A 2 095 866) déposé le 3 juin 1971 au nom de SUMITOMO CHEMICAL CO LTD, on décrit la fabrication de poudres de polychlorure de vinyle par polymérisation en suspension aqueuse du chlorure de vinyle à l'intervention d'un initiateur oléosoluble et d'un système dispersant comprenant un dérivé cellulosique et un émulsionnant anionique. On y affirme qu'un tel polychlorure de vinyle en poudre présente de bonnes propriétés mécaniques et électriques, mais qu'utilisé seul, il ne convient néanmoins pas pour la fabrication de séparateurs de batteries à cause de ses mauvaises propriétés lors de l'application à la râcle ou au rouleau et en particulier à cause de sa frittabilité déficiente.

Dans ce même brevet, on préconise d'utiliser pour la fabrication de séparateurs de batteries des compositions comprenant un mélange de 95 à 50 % en poids d'un tel polychlorure de vinyle en poudre préparé par polymérisation en suspension aqueuse et de 5 à 50 % en poids de polychlorure de vinyle en poudre préparé par polymérisation en émulsion aqueuse, ainsi que de 0,1 à 3 parties en poids pour 100 parties dudit mélange d'un agent antistatique non ionique. L'addition de poudre de polychlorure de vinyle obtenue en émulsion aqueuse et d'un agent antistatique non ionique, dans les proportions spécifiées ci-dessus, améliore certes la frittabilité et les propriétés d'usinage de la poudre de polychlorure de vinyle obtenue en suspension aqueuse. Cependant, les propriétés mécaniques des séparateurs frittés résultants sont diminuées et ceux-ci accusent toujours une tendance à engendrer la formation de mousses.

Il appert donc que les qualités des séparateurs de batteries obtenus au départ des compositions de l'art antérieur ne sont pas optimales. La préparation de telles compositions est en outre compliquée étant donné qu'elle exige la fabrication de poudres de polychlorure de vinyle suivant deux recettes différentes et le mélange final avec un agent antistatique.

La présente invention vise à procurer des poudres de polychlorure de vinyle frittables appropriées pour la fabrication de séparateurs de batteries de bonnes qualités et qui ne présentent pas les inconvénients susmentionnés.

La présente invention concerne à cet effet l'utilisation de poudres de polymères de chlorure de vinyle pour la fabrication de plaques de séparation pour piles et accumulateurs obtenues par polymérisation en suspension aqueuse du chlorure de vinyle à l'intervention d'un initiateur oléosoluble de la polymérisation radicalaire et en présence d'un système dispersant comprenant un dérivé cellulosique et un émulsionnant anionique, par un procédé selon lequel on effectue initialement la polymérisation à l'intervention de l'initiateur oléosoluble et on ajoute en cours de polymérisation un initiateur hydrosoluble de la polymérisation radicalaire.

La Demanderesse a découvert en effet que lorsqu'on initie la polymérisation en suspension aqueuse du chlorure de vinyle au moyen d'un initiateur oléosoluble, en présence d'un agent dispersant cellulosique et d'un émulsionnant anionique, et qu'on ajoute un initiateur hydrosoluble en cours de polymérisation, il est possible d'obtenir directement des polymères en poudre du chlorure de vinyle frittables, aptes à la fabrication de séparateurs de batteries présentant de bonnes propriétés électriques et mécaniques.

Le moment où l'on effectue l'addition de l'initiateur hydrosoluble n'est pas particulièrement critique, pour autant toutefois que celle-ci ait lieu en cours de polymérisation. On peut donc l'effectuer à tout moment en cours de polymérisation, c'est-à-dire après le début mais avait la fin de la polymérisation. Par fin de polymérisation, on entend le moment où, le taux de conversion souhaité étant atteint, on dégaze le réacteur de polymérisation en abaissant la pression. Habituellement, on interrompt la polymérisation par dégazage lorsque le taux de conversion atteint de 85 à 95 % environ. En règle générale, on ajoute donc l'initiateur hydrosoluble avant que le taux de conversion ait atteint 85 %. Il est particulièrement avantageux de l'ajouter avant que le taux de conversion dépasse 80 %.

Il n'est par ailleurs pas indiqué d'introduire l'initiateur hydrosoluble dans le milieu de polymérisation alors que le taux de conversion est encore relativement faible, généralement inférieur à 60 % environ. Afin d'obtenir un polychlorure de vinyle en poudre dont les propriétés sont optimales, il est préféré d'introduire l'initiateur hydrosoluble après que le taux de conversion a atteint au moins 70 %.

Suivant un mode de réalisation préféré de la présente invention, on ajoute donc au milieu de

2

polymérisation un initiateur hydrosoluble de la polymérisation radicalaire lorsque le taux de conversion est compris entre 70 et 80 % environ et on continue par ailleurs à polymériser jusqu'à ce que le taux de conversion ait atteint une valeur de 85 à 95 %. Habituellement, la polymérisation est poursuivie à la même température.

La nature de l'initiateur hydrosoluble n'est pas critique et, en général, tous les initiateurs de la polymérisation radicalaire en émulsion aqueuse conviennent. A titre d'exemples de pareils initiateurs, on peut mentionner les persels, les peracides, et le peroxyde d'hydrogène (eau oxygénée). De préférence, on utilise des persels inorganiques, plus particulièrement encore des persulfates des métaux alcalins et d'ammonium, ou du peroxyde d'hydrogène.

Dans le cas où l'on utilise un persel inorganique, tel que par exemple un persulfate de potassium ou d'ammonium, il peut être souhaitable d'ajouter aussi une substance basique (par exemple, un hydroxyde de métal alcalin ou d'ammonium) à la charge initiale de polymérisation si l'on veut obtenir des séparateurs dont la stabilité thermique soit optimale. La quantité de substance basique à utiliser peut être facilement déterminée par voie expérimentale dans chaque cas particulier. Pour fixer les idées, une quantité d'environ 0,1 à 1 partie en poids pour 1 000 parties de chlorure de vinyle convient généralement pour améliorer la stabilité thermique du polychlorure de vinyle.

On peut aussi bien mettre en œuvre un seul initiateur hydrosoluble que plusieurs. Quand on utilise plusieurs initiateurs hydrosolubles, on peut les mettre en œuvre à des moments différents. On peut également les ajouter par fractions ou de manière continue.

La quantité d'initiateur hydrosoluble à introduire dans la suspension aqueuse n'est pas critique. Elle dépend dans une certaine mesure de la température de polymérisation, ainsi que de la nature chimique de l'initiateur hydrosoluble. Pour fixer les idées, l'introduction de très faibles quantités d'initiateur hydrosoluble, de 0,1 ‰ environ en poids par rapport au chlorure de vinyle mis en œuvre apporte généralement déjà une amélioration des qualités des poudres de polychlorure de vinyle et notamment de leur aptitude au frittage. L'introduction de quantités plus élevées d'initiateur hydrosoluble renforce cette amélioration. Toutefois, on préfère généralement ne pas dépasser une quantité de 3 ‰ en poids. Dans le cas où l'initiateur hydrosoluble est un persel inorganique, la concentration préférée en initiateur hydrosoluble est généralement comprise entre 0,15 et 1 ‰ environ. Dans le cas où il s'agit de peroxyde d'hydrogène, la zone des concentrations préférées est comprise entre 0,5 et 2,5 ‰ environ.

La nature de l'initiateur oléosoluble mis en œuvre au départ de la polymérisation en suspension aqueuse n'est pas critique. En général, tous les initiateurs oléosolubles usuellement utilisées pour ce type de polymérisation conviennent. Cependant, les meilleurs résultats sont obtenus avec les peroxydicarbonates de dialkyles supérieurs et les azo-bis-nitriles.

Par peroxydicarbonate de dialkyle supérieur, on entend désigner les peroxydicarbonates de dialkyles dont les chaînes alkyles, différentes ou identiques et éventuellement substituées, contiennent au moins 7 atomes de carbone et, de préférence au moins 12 atomes de carbone. On utilise avantageusement des peroxydicarbonates dont les chaînes alkyles, identiques, contiennent chacune de 12 à 20 atomes de carbone. A titre d'exemples de pareils peroxydicarbonates, on peut citer les peroxydicarbonates de didécyle, de dilauryle, de dimyristyle, de dicétyle et de distéaryle. Un peroxydicarbonate tout particulièrement préféré est le peroxydicarbonate de dicétyle.

Par azo-bis-nitrile, on entend par ailleurs désigner les composés de formule générale CN−R−N=N−R−CN dans laquelle R représente une chaîne alkylénique, droite ou ramifiée contenant de 2 à 10 atomes de carbone, et de préférence de 4 à 8 atomes de carbone. A titre d'exemples de pareils azo-bis-nitriles, on peut citer l'azo-bis-isobutyronitrile, l'azo-bis-valéronitrile, l'azo-bis-2,4-diméthylvaléronitrile. Un azo-bis-nitrile tout particulièrement préféré est l'azo-bis-2,4-diméthylvaléronitrile.

Suivant un mode de réalisation préféré de la présente invention, on initie donc la polymérisation en suspension aqueuse du chlorure de vinyle au moyen d'un initiateur oléosoluble choisi parmi les peroxydicarbonates de dialkyles supérieurs et les azo-bis-nitriles (ou d'un système catalytique en comprenant). De préférence, on utilise un peroxydicarbonate de dialkyle supérieur.

La quantité d'initiateur oléosoluble mise en œuvre au départ de la polymérisation n'est pas critique. Elle dépend notamment de la durée de demi-vie de l'initiateur dans les conditions de polymérisation, ainsi que de la capacité d'échange thermique de l'installation. Habituellement, on met en œuvre de 0,01 à 0,5 % en poids d'initiateur oléosoluble (ou d'un mélange d'initiateurs oléosolubles) par rapport au chlorure de vinyle. De préférence, on utilise environ 0,1 % en poids d'initiateur oléosoluble.

L'agent dispersant cellulosique utilisé pour fabriquer les poudres selon l'invention peut être choisi indifféremment parmi tous les dérivés cellulosiques hydrosolubles usuellement utilisés pour la polymérisation en suspension aqueuse du chlorure de vinyle. A titre d'exemples de pareils dérivés, on peut citer les alkylcelluloses telles que la méthyl-, l'éthyl-, et la propylcellulose, les hydroxyalkylcelluloses telles que l'hydroxyéthyl-, l'hydroxypropyl- et l'hydroxybutylcellulose et les éthers mixtes de la cellulose tels que l'(hydroxypropyl) (méthyl) cellulose. De préférence, on utilise les alkylcelluloses. Une alkylcellulose tout particulièrement préférée est la méthylcellulose.

La quantité de dispersant cellulosique est habituellement comprise entre 1 et 5 ‰ en poids par rapport au chlorure de vinyle initialement mis en œuvre. Les meilleurs résultats sont obtenus lorsqu'on en utilise de 2 à 2,5 ‰ en poids.

La nature de l'émulsionnant anionique utilisé pour fabriquer les poudres selon l'invention n'est pas critique. Cependant, les meilleurs résultats sont obtenus avec les émulsionnants sulfonatés. A titre d'exemples de pareils émulsionnants, on peut citer les sels de métaux alcalins, tels que le sodium, des acides alkylsulfoniques, arylsulfoniques et alkylarènesulfoniques. Les meilleurs résultats sont obtenus avec les alkylsulfonates et les alkylarènesulfonates de métaux alcalins et plus particulièrement ceux dont les radicaux alkyle contiennent de 8 à 16 atomes de carbone. Des émulsionnants tout particulièrement préférés sont les alkylarènesulfonates de métaux alcalins. Parmi ceux-ci, on donne la préférence au dodécylbenzènesulfonate de sodium.

Quoique la quantité d'émulsionnant anionique à mettre en œuvre ne soit pas particulièrement critique, il est recommandé de l'utiliser en de très faibles quantités, généralement nettement inférieures à la quantité de dérivé cellulosique mis en œuvre. Avantageusement, on l'utilise donc en une quantité allant de 0,1 à 2‰ en poids par rapport au chlorure de vinyle initialement mis en œuvre. Les meilleurs résultats sont obtenus lorsqu'on utilise de 0,50 à 1,5‰ en poids d'émulsionnant anionique.

Suivant un mode de réalisation tout particulièrement préféré de la présente invention, on démarre donc la polymérisation en suspension aqueuse du chlorure de vinyle en présence de peroxydicarbonate de dicétyle et d'un système dispersant à base de méthylcellulose et de dodécylbenzènesulfonate de sodium et on ajoute du peroxyde d'hydrogène et/ou un persulfate de métal alcalin ou d'ammonium en cours de polymérisation lorsque le taux de conversion est compris entre 70 et 80 %.

La température de polymérisation n'est pas critique et est généralement comprise entre 50 et 75 °C, avantageusement entre 55 et 65 °C. Les polymères obtenus ont généralement des valeurs K (mesurées à 25 °C dans la cyclohexanone) comprises entre 53 et 74, de préférence entre 60 et 69.

La quantité d'eau mise en œuvre est habituellement telle que le poids total des monomères représente de 20 à 50 % du total eau plus monomères, avantageusement de 40 à 50 %. Dans certains cas, et en particulier lorsqu'on utilise un persel comme initiateur hydrosoluble, il peut être avantageux de démarrer la polymérisation avec un rapport pondéral entre les monomères et la charge totale d'environ 50 % et de faire précéder l'injection de l'initiateur hydrosoluble de l'addition d'une quantité supplémentaire d'eau, de manière à obtenir un rapport pondéral d'environ 40 %.

La poudre de polychlorure de vinyle de l'invention est isolée de manière conventionnelle du milieu de polymérisation, par exemple par filtration, et il n'est pas nécessaire de lui faire subir des traitements particuliers ou de lui ajouter des additifs spéciaux. Elle peut ensuite être séchée, à l'air chaud par exemple, après quoi elle est prête à être mise en œuvre.

Par polymères du chlorure de vinyle, on entend désigner aussi bien les polymères obtenus par homopolymérisation du chlorure de vinyle que ceux obtenus par copolymérisation du chlorure de vinyle avec jusqu'à 20 % en poids d'un comonomère éthyléniquement insaturé copolymérisable tel que l'acétate de vinyle, l'éthylène, le propylène et le butylène. On préfère tout particulièrement les homopolymères du chlorure de vinyle.

Les poudres de polychlorure de vinyle utilisables selon l'invention sont des poudres frittables, à teneur réduite, généralement inférieure à 2‰ en poids, en agent dispersant, présentant une granulométrie resserrée et un diamètre moyen des particules de 30 à 45 microns environ, de même qu'une faible résistance électrique, généralement inférieure à 2 milliohm/dm$^2$.

Ces poudres de polychlorure de vinyle sont particulièrement adaptées à la fabrication de séparateurs de batteries mouillables présentant d'excellentes propriétés électriques et mécaniques. Pour ce faire, on peut utiliser les méthodes conventionnelles de fabrication de séparateurs de batteries à partir de poudres de polychlorure de vinyle.

Les exemples qui suivent sont destinés à illustrer la présente invention sans toutefois en limiter la portée.

Les exemples 1, 2 et 3 illustrent la préparation des poudres utilisables selon l'invention. L'exemple 4R, de référence, concerne l'obtention d'une poudre de polychlorure de vinyle par polymérisation sans addition d'un initiateur hydrosoluble en cours de polymérisation.

## Exemple 1

Dans un réacteur de 4,5 litres muni d'une double enveloppe et d'un agitateur à pales verticales, on introduit successivement à 20 °C sous agitation (200 t/min) 1 000 g d'eau déminéralisée, 0,75 g de dodécylbenzènesulfonate de sodium sous la forme d'une solution aqueuse à 10 % en poids, 2 g d'une méthylcellulose commerciale en poudre vendue sous la dénomination METHOCEL A 4C et 1 g de peroxydicarbonate de dicétyle. On ferme le réacteur et on maintient l'agitation à 200 t/min pendant 5 minutes. On arrête l'agitation. On met le réacteur sous vide partiel (100 mm Hga), puis on le soumet à un balayage par de l'azote (1 360 mm Hga), avant de le remettre sous le même vide partiel. On y introduit alors 1 000 g de chlorure de vinyle. On remet l'agitation en marche (500 t/min) et on maintient l'agitation pendant 30 minutes. On chauffe le milieu à 58 °C. Lorsque le taux de conversion atteint 75 %, on introduit 0,25 g de persulfate d'ammonium dans le milieu de réaction et on laisse la polymérisation se poursuivre jusqu'à ce que le taux de conversion atteigne 92 %. On dégaze la suspension aqueuse (en abaissant la pression à 360 mm Hga), on essore le polymère et on le sèche dans les conditions usuelles (2 h 30 min à 70 °C).

4

# 0 000 083

### Exemple 2

Cet exemple est conforme à l'exemple 1, sauf qu'on introduit 0,3 g d'hydroxyde de sodium dans la charge aqueuse après l'introduction de l'eau déminéralisée.

### Exemple 3

Cet exemple est identique à l'exemple 1 sauf qu'on remplace le persulfate d'ammonium par 0,6 g de peroxyde d'hydrogène (à 100 %).

### Exemple 4R

Cet exemple est identique à l'exemple 1, sauf qu'on omet l'introduction en cours de polymérisation de persulfate d'ammonium.

Dans le Tableau I, en annexe, sont consignés les résultats de l'analyse granulométrique des polychlorures de vinyle obtenus suivant les exemples 1, 2, 3 et 4R.

La comparaison des résultats montre que l'introduction en différé d'un initiateur hydrosoluble n'a pas d'effet marqué sur la granulométrie du polychlorure de vinyle obtenu par polymérisation à l'intervention d'un initiateur oléosoluble en présence d'un dérivé cellulosique et d'un émulsionnant anionique.

On a par ailleurs évalué l'aptitude au frittage des polychlorures de vinyle obtenus suivant les exemples 1 à 4R. Pour ce faire, on a fabriqué des éléments de séparateurs de batteries de 0,4 mm d'épaisseur par enduction au rouleau de la poudre de polychlorure de vinyle au moyen de matériel de laboratoire.

Dans le Tableau II sont consignés les résultats de l'évaluation.

La comparaison des résultats des exemples 1, 2 et 3 avec ceux de l'exemple 4R indique que l'introduction différée d'un initiateur hydrosoluble a un effet très marqué sur l'aptitude au frittage des poudres de polychlorure de vinyle obtenues. C'est ainsi que la poudre de polychlorure de vinyle fabriquée suivant l'exemple 4R adhère fort au support métallique lors de l'enduction et conduit à un frittage de très mauvaise qualité, à tel point qu'il n'a pas été possible d'évaluer la tension de rupture de l'échantillon fritté. Par contre, les poudres de polychlorure de vinyle obtenues suivant les exemples 1, 2 et 3 adhèrent peu, voire pas du tout au rouleau et conduisent à l'obtention d'échantillons frittés de bonne qualité présentant une tension de rupture supérieure à 50 kg/cm$^2$.

## TABLEAU I

| Analyse granulométrique (par tamisage) | | | | | |
|---|---|---|---|---|---|
| N° de l'exemple | | 1 | 2 | 3 | 4R |
| Diamètre moyen, | microns | 38 | 32 | 43 | 39 |
| passé 65 microns, | g/kg | 882 | 940 | 878 | 928 |
| refus 125 microns, | g/kg | 4 | 2 | 6 | 2 |

## TABLEAU II

| Aptitude au frittage | | | | | |
|---|---|---|---|---|---|
| N° de l'exemple | | 1 | 2 | 3 | 4R |
| Température de frittage | | 214 | 213 | 213 | 214 |
| Durée de frittage, | min., sec. | 5 min 45 sec | 7 min 30 sec | 8 min 30 sec | 7 min 45 sec |
| Qualité du frittage | | bonne | bonne | bonne | très mauvaise |
| Adhérence sur métal | | légère | légère | nulle | assez forte |

## Revendications

1. Utilisation de poudres de polymères du chlorure de vinyle pour la fabrication de plaques de séparation pour piles et accumulateurs, caractérisée en ce que ces poudres sont obtenues par polymérisation en suspension aqueuse du chlorure de vinyle à l'intervention d'un initiateur oléosoluble de la polymérisation radicalaire et en présence d'un système dispersant comprenant un dérivé

# 0 000 083

cellulosique et un agent émulsionnant anionique par un procédé selon lequel on effectue initialement la polymérisation à l'intervention de l'initiateur oléosoluble et on ajoute en cours de polymérisation un initiateur hydrosoluble de la polymérisation radicalaire.

2. Utilisation selon la revendication 1, caractérisée en ce que les poudres sont obtenues par un procédé selon lequel on ajoute l'initiateur hydrosoluble avant que le taux de conversion dépasse 80 %.

3. Utilisation selon la revendication 1 ou 2, caractérisée en ce que les poudres sont obtenues par un procédé selon lequel on ajoute l'initiateur hydrosoluble après que le taux de conversion a atteint 70 %.

4. Utilisation selon l'une quelconque des revendications 1 à 3, caractérisée en ce que les poudres sont obtenues par un procédé selon lequel on interrompt la polymérisation lorsque le taux de conversion atteint de 85 à 95 %.

5. Utilisation selon l'une quelconque des revendications 1 à 4, caractérisée en ce que les poudres sont obtenues par un procédé selon lequel l'initiateur hydrosoluble est choisi parmi les persulfates de métaux alcalins ou d'ammonium et le peroxyde d'hydrogène et est utilisé en une quantité allant de 0,1 à 3 ‰ en poids par rapport au chlorure de vinyle mis en œuvre.

6. Utilisation selon l'une quelconque des revendications 1 à 5, caractérisée en ce que les poudres sont obtenues par un procédé selon lequel le dérivé cellulosique est choisi parmi les alkylcelluloses, les hydroxyalkylcelluloses et les (hydroxyalkyl) (alkyl)celluloses et est utilisé en une quantité comprise entre 1 à 5 ‰ en poids par rapport au chlorure de vinyle mis en œuvre.

7. Utilisation selon la revendication 6, caractérisée en ce que les poudres sont obtenues par un procédé selon lequel le dérivé cellulosique est une alkylcellulose.

8. Utilisation selon l'une quelconque des revendications 1 à 7, caractérisée en ce que les poudres sont obtenues par un procédé selon lequel l'émulsionnant anionique est choisi parmi les sels de métaux alcalins des acides alkylsulfoniques, alkylarènesulfoniques et arylsulfoniques et est utilisé en une quantité allant de 0,1 à 2 ‰ en poids par rapport au chlorure de vinyle mis en œuvre.

9. Utilisation selon la revendication 8, caractérisée en ce que les poudres sont obtenues par un procédé selon lequel l'émulsionnant anionique est un sel de métal alcalin d'un acide alkylarènesulfonique.

## Claims

1. Use of polyvinyl chloride powders for the manufacture of separating plates for cells and accumulators, characterised in that these powders are obtained by the polymerisation of vinyl chloride in aqueous suspension, with the intervention of an oil-soluble initiator of free-radical polymerisation and in the presence of a dispersing system comprising a cellulose derivative and an anionic emulsifying agent, by a process in which the polymerisation is initially carried out with the intervention of the oil-soluble initiator, and a water-soluble initiator of free-radical polymerisation is added during polymerisation.

2. Use according to Claim 1, characterised in that the powders are obtained by a process in which the water-soluble initiator is added before the degree of conversion exceeds 80 %.

3. Use according to Claim 1 or 2, characterised in that the powders are obtained by a process in which the water-soluble initiator is added after the degree of conversion has reached 70 %.

4. Use according to any one of Claims 1 to 3, characterised in that the powders are obtained by a process in which the polymerisation is interrupted when the degree of conversion reaches from 85 to 95 %.

5. Use according to any one of Claims 1 to 4, characterised in that the powders are obtained by a process in which the water-soluble initiator is chosen from amongst alkali metal or ammonium persulphates and hydrogen peroxide and is used in an amount ranging from 0.1 to 3 ‰ by weight, relative to the vinyl chloride used.

6. Use according to any one of Claims 1 to 5, characterised in that the powders are obtained by a process in which the cellulose derivative is chosen from amongst alkyl celluloses, hydroxyalkyl celluloses and (hydroxyalkyl)(alkyl)celluloses and is used in an amount of between 1 and 5 ‰ by weight, relative to the vinyl chloride used.

7. Use according to Claim 6, characterised in that the powders are obtained by a process in which the cellulose derivative is an alkyl cellulose.

8. Use according to any one of Claims 1 to 7, characterised in that the powders are obtained by a process in which the anionic emulsifier is chosen from amongst alkali metal salts of alkylsulphonic, alkylarenesulphonic and arylsulphonic acids and is used in an amount ranging from 0.1 to 2 ‰ by weight, relative to the vinyl chloride used.

9. Use according to Claim 8, characterised in that the powders are obtained by a process in which the anionic emulsifier is an alkali metal salt of an alkylarenesulphonic acid.

## Ansprüche

1. Verwendung von Vinylchloridpolymer-Pulvern zur Herstellung von Trennscheiben für Batterie-

6

zellen und Akkumulatoren, dadurch gekennzeichnet, daß diese Pulver erhalten sind durch Polymerisation von Vinylchlorid in wässriger Suspension unter Vermittlung eines öllöslichen Initiators der Radikalpolymerisation und in Anwesenheit eines Dispersionssystems bestehend aus einem Zellulosederivat und einem anionischen Emulgator durch ein Verfahren, wonach man die Polymerisation anfänglich mittels des öllöslichen Initiators bewirkt und im Laufe der Polymerisation einen wasserlöslichen Initiator der Radikalpolymerisation hinzufügt.

2. Verwendung gemäß Anspruch 1 dadurch gekennzeichnet, daß die Pulver erhalten sind durch ein Verfahren, bei welchem man den wasserlöslichen Initiator zusetzt bevor der Umsetzungsgrad 80 % überschreitet.

3. Verwendung gemäß Anspruch 1 oder 2 dadurch gekennzeichnet, daß die Pulver erhalten sind durch ein Verfahren, bei welchem an den wasserlöslichen Initiator zusetzt nachdem der Umsetzungsgrad 70 % erreicht hat.

4. Verwendung gemäß einem der Ansprüche 1 bis 3 dadurch gekennzeichnet, daß die Pulver erhalten sind durch ein Verfahren, nach welchem man die Polymerisation unterbricht, wenn der Umsetzungsgrad 85 bis 95 % erreicht hat.

5. Verwendung gemäß einem der Ansprüche 1 bis 4 dadurch gekennzeichnet, daß die Pulver erhalten sind durch ein Verfahren, bei welchem der wasserlösliche Initiator ausgewählt ist unter den Persulfaten der Alkalimetalle und des Ammoniums und Wasserstoffperoxid und eingesetzt wird in einer Menge von 0,1 bis 3 Gew.-‰ bezogen auf das eingesetzte Vinylchlorid.

6. Verwendung gemäß einem der Ansprüche 1 bis 5 dadurch gekennzeichnet, daß die Pulver erhalten sind durch ein Verfahren, bei welchem das Zellulosederivat ausgewählt ist unter den Alkylzellulosen, den Hydroxyalkylzellulosen und den (Hydroxyalkyl)-(alkyl)zellulosen und angewandt wird in einer Menge von 1 bis 5 Gew.-‰ bezogen auf das eingesetzte Vinylchlorid.

7. Verwendung gemäß Anspruch 6 dadurch gekennzeichnet, daß die Pulver erhalten sind durch ein Verfahren, bei welchem das Zellulosederivat eine Alkylzellulose ist.

8. Verwendung gemäß einem der Ansprüche 1 bis 7 dadurch gekennzeichnet, daß die Pulver erhalten sind durch ein Verfahren, bei welchem der anionische Emulgator ausgewählt ist unter den Alkalimetallsalzen von Alkylsulfonsäuren, Alkylarensulfonsäuren und Arylsulfonsäuren und eingesetzt wird in einer Menge von 0,1 bis 2 Gew.-‰ bezogen auf das eingesetzte Vinylchlorid.

9. Verwendung gemäß Anspruch 8 dadurch gekennzeichnet, daß die Pulver erhalten sind durch ein Verfahren, bei welchem der anionische Emulgator ein Alkalimetallsalz einer Alkylarensulfonsäure ist.